**Europäisches Patentamt**

**European Patent Office**

**Office européen des brevets**

(19)

(11) Numéro de publication: **0 053 056**

**B1**

(12) **FASCICULE DE BREVET EUROPEEN**

(45) Date de publication du fascicule du brevet: **27.12.84**

(51) Int. Cl.³: **B 60 T 13/24,** B 60 T 11/20

(21) Numéro de dépôt: **81401704.2**

(22) Date de dépôt: **27.10.81**

(54) **Installation de freinage pour véhicules utilitaires.**

(30) Priorité: **21.11.80 FR 8024783**

(43) Date de publication de la demande:
**02.06.82 Bulletin 82/22**

(45) Mention de la délivrance du brevet:
**27.12.84 Bulletin 84/52**

(84) Etats contractants désignés:
**DE GB IT**

(56) Documents cités:
**FR-A-1 326 576**
**FR-A-2 016 563**
**FR-A-2 149 265**
**US-A-2 402 344**
**US-A-3 771 838**
**US-A-4 096 696**

(73) Titulaire: **SOCIETE ANONYME D.B.A.**
**Centre Paris Pleyel**
**F-93521 St-Denis Cédex 01 (FR)**

(72) Inventeur: **Muterel, Roland**
**5 Résidence les Beaux Lieux**
**F-95550 Bessancourt (FR)**

(74) Mandataire: **Poidatz, Emmanuel et al**
**Service Brevets Bendix 44 rue François 1er**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention concerne une installation de freinage pour véhicules utilitaires et plus particulièrement une installation de freinage du type comportant un maître-cylindre à commande manuelle, un premier et une second servomoteurs à dépression pour respectivement une première paire et une seconde paire de freins, chaque servomoteur étant commandé par une valve de commande actionnée par une pression en provenance du maître-cylindre et comprenant une chambre hydraulique d'assistance et de réalimentation, la chambre d'assistance et de réalisation du premier servomoteur étant reliée au maître-cylindre et la chambre d'assistance et de réalimentation du second servomoteur étant reliée à une réservoir de liquide de frein à la pression atmosphérique.

Une telle installation de freinage est décrite dans le document US—A—2 402 344 et son avantage principal réside dans la réduction de la source du maître-cylindre, du fait que celle-ci est proportionnelle à la seule absorbtion de la paire de freins desservie par le premier servomoteur.

L'installation de freinage décrite dans ce document, destinée à des véhicules utilitaires, met en oeuvre deux paires de freins à tambour, le premier servomoteur desservant typiquement les freins arrières, et les deux servomoteurs étant commandés par un maître-cylindre simple à chambre unique.

On observera que de nombreux véhicules utilitaires sont équipés de freins à tambour du type autoserreur qui présentent une absorption peu élevée mais qui, pour une pression d'alimentation donnée, délivrent un couple de freinage très variable, au détriment de la stabilité du véhicule lors de freinage. Si l'on choisit d'équiper ce véhicule de freins à tambour du type non autoserreur, la stabilié du véhicule est nettement améliorée mais la couple de freinage sera obtenu au prix d'un accroissement de l'absorption, par conséquent de la course du maître-cylindre.

Afin de pallier cet inconvénient, l'invention propose une installation de freinage du type spécifié ci-avant, caractérisée en ce que le maître cylindre est un maître-cylindre tandem comportant deux chambres, les valves de commande des premier et second servomoteurs étant respectivement reliées à l'une et l'autre de ces chambres du maître-cylindre, les freins de la première paire étant des freins à disque et les freins de la seconde paire étant des freins à tambour du type non autoserreur.

On conçoit qu'avec cet agencement, mettant en oeuvre des freins à disque avant, compte tenu du fait que les freins à disque présentent, à couple de freinage égal, une absorption inférieure à celle des freins à tambour du type non autoserreur, on conservera une course raisonnable pour le maître-cylindre en améliorant encore la stabilité du véhicule.

L'invention sera maintenant décrite en se référant aux dessins annexés dans lesquels:

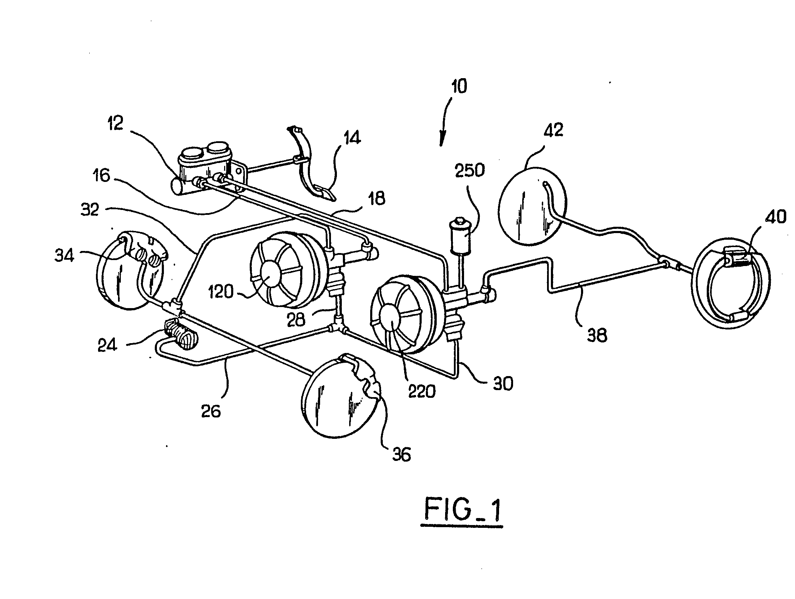

— la figure 1 est une représentation schématique d'une installation de freinage selon l'invention;

— la figure 2 est une vue en coupe longitudinale d'un premier servomoteur de l'installation de freinage représentée à la figure 1; et

— la figure 3 est une vue en coupe longitudinale d'un second servomoteur de l'installation de freinage représentée à la figure 1.

L'installation de freinage désignée par la référence générale 10 comprend un maître-cylindre tandem 12 dont la structure ne sera pas exposée en détail. Ce maître-cylindre est actionné au moyen d'une pédale 14.

Le liquide sous pression provenant des deux chambres du maître-cylindre emprunte deux conduits 16 et 18 qui aboutissent respectivement à un premier servomoteur 120 et à un second servomoteur 220. Ces servomoteur sont du type à dépression et à commande hydraulique comme connu par exemple du brevet français publié sous le No. 1 326 576 mais comme il sera expliqué ci-après, ces deux servomoteurs ne sont pas identiques.

Les deux servomoteurs sont reliés à une source de dépression 24 au moyen d'un conduit 26 comportant deux branches 28 et 30. Le premier servomoteur 120 est relié par un conduit 32 à une paire de freins à disque 34 et 36 associés aux roues avant du véhicule, tandis que le second servomoteur 220 est relié par un conduit 38 à une paire de freins à tambour 40 et 42 associés aus roues arrière du véhicule, ces freins à tambour étant du type non autoserreur.

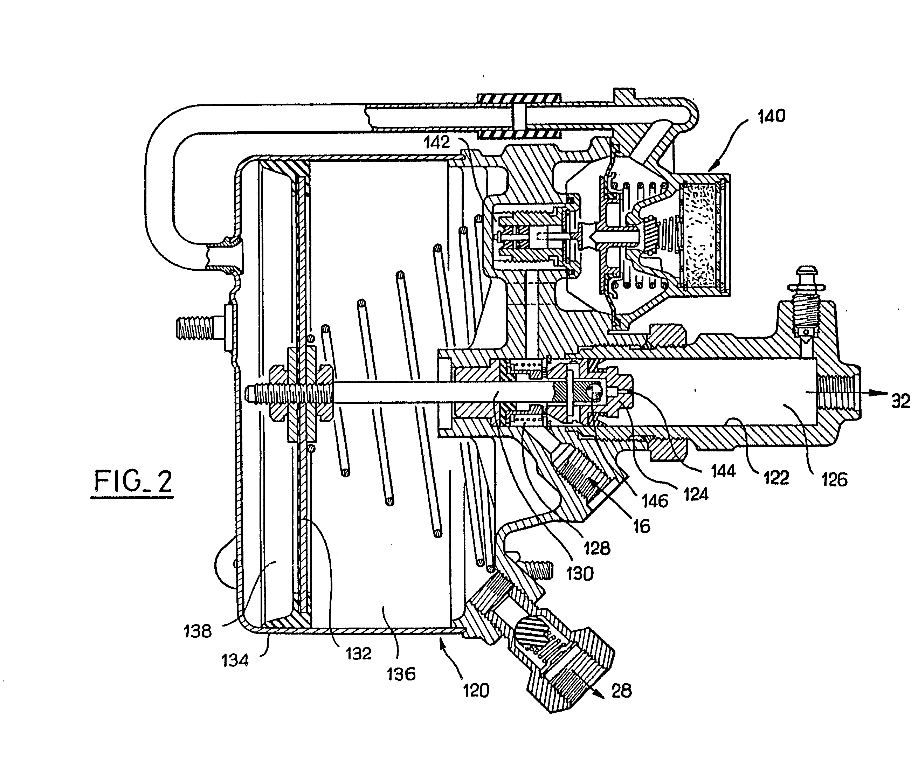

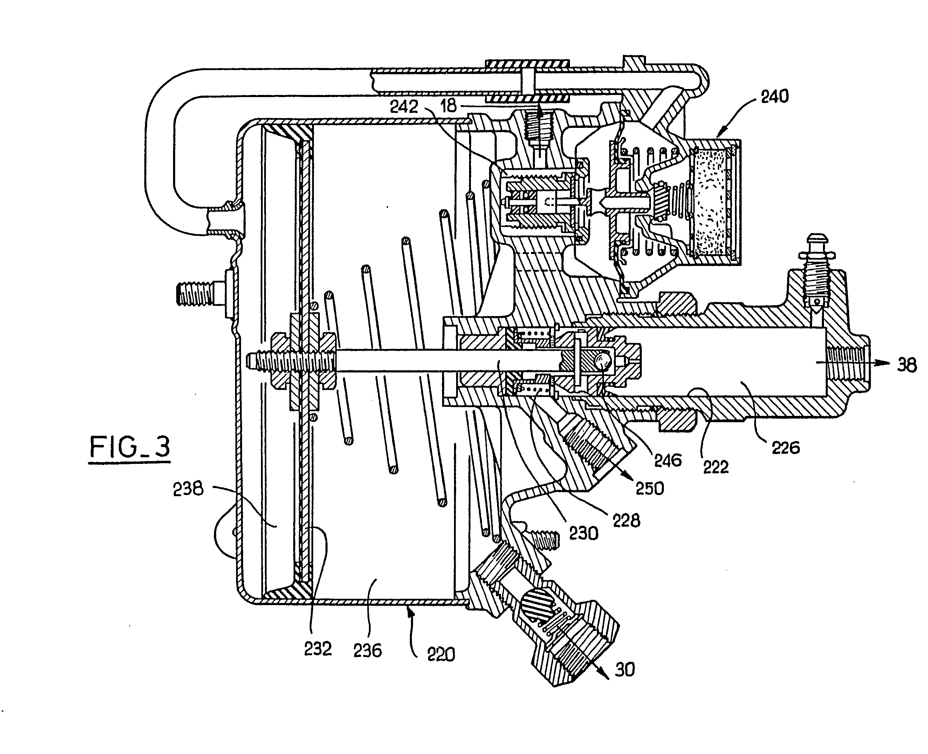

La structure des servomoteurs 120 et 220 sera maintenance décrite en se référant aux figures 2 et 3 successivement.

Le servomoteur 120 comprend un cylinder 122 dans lequel est monté coulissant un piston moteur 124, ce dernier séparant le cylinder 122 en une chambre de pression 126 et une chambre d'assistance et de réalimentation 128. Dans cette dernière se projette une tige de poussée 130 susceptible d'entraîner le piston moteur 124 dans les deux sens grâce à une liaison à course morte dont la structure ne sera pas détaillée. A son autre extrémité, la tige de poussée 130 est solidaire d'un piston de servomoteur 132 qui divise un boîtier 134, solidaire du cylindre 122, en deux compartiments 136 et 138, le premier étant constamment mis en communication avec la source de dépression et le second pouvant être mis en communication soit avec la source de dépression soit avec l'atmosphère au moyen d'une valve de commande 140 comme il sere expliqué plus loin. La chambre de pression 126 communique avec le conduit 32 d'alimentation des freins à disque et la chambre d'assistance 128 communique à la fois avec le conduit 16 de liaison avec le maître-cylindre 12 et une chambre de commande 142 de la valve de commande 140. Enfin, la chambre d'assistance 128 et la chambre de pression 126 peuvent communiquer grâce à un passage 144 traversant le piston moteur 124, cette communication étant contrôlée par un clapet 146 solidaire de la tige 130.

Le servomoteur 220 comprend un certain nombre d'éléments identiques qui sont désignés par le même référence augmentée de la valeur 100. La chambre de pression 226 de ce servomoteur communique avec le conduit 38 d'alimentation des freins arrière. Par contre, dans ce servomoteur, la chambre d'assistance et de réalisation 228 communique avec un réservoir de liquide 250 à la pression atmosphérique, et la chambre de commande 242 de la valve de commande 240 communique avec la conduit 18 de liaison avec le maître-cylindre 12.

L'installation ainsi décrite fonctionne de la manière suivant: lors d'une mise en oeuvre du maître-cylindre 12, le liquide sous pression est transmis aux servomoteurs 120 et 220 par le conduits 16 et 18. Il en résulte une mise sous pression de chambres de commande 142 et 242 des valves de commande 140 et 240, lesquelles mettent alors les compartiments 138 et 238 en communication avec l'atmosphére. Les pistons de servomoteurs 132 et 232 et les tiges de poussée 130 et 230 sont alors déplacées vers les cylindres 122 et 222 en provoquant tout d'abord la fermeture des clapet 146 et 246 puis la mise en pression des chambres de pression 126 et 226. L'admission de liquide sous pression dans les freins provoque alors le freinage du véhicule.

Durant la première phase, c'est-à-dire avant la fermeture des clapets 146 et 246, la course de la pédale 14 est proportionnelle à l'absorption des deux valves de commande 140 et 240, augmentée d'une légère absorption du circuit de freinage avant.

Durant la seconde phase, après fermeture des clapets 146 et 246, la course de la pédale 14 est alors proportionnelle à la seule absorption du circuit de freinage avant. En effet, dans le second servomoteur 220, le conduit 18 alimente uniquement la chambre de commande 242, tandis que dans le premier servomoteur 120, le conduit 16 alimente, outre la chambre de commande 142, la chambre d'assistance 128 dont le volume croit en fonction de la diminution de volume de la chambre de pression 140, donc en fonction de l'absorption du circuit de freinage avant.

Comme il a été choisi d'équiper les roues avant de freins à disque qui présentent une absorption inférieure à celle des freins à tambour du type non autoserreur, à couple de freinage égal, la course du maître-cylindre reste limitée, c'est-à-dire comparable à celle qui serait obtenue avec des freins à tambour du type autoserreur.

On remarquera que l'installation de freinage décrite permet également de bénéficier des avantages suivants:

En premier lieu, dans le premier servomoteur, la chambre d'assistance est remplie de liquide sous pression provenant du maître-cylindre, ce qui procure une force additionnelle sur le piston moteur et permet d'engendrer dans la chambre de pression une pression supérieure à celle qui serait obtenue à l'aide du seul piston de servomoteur, ce qui n'est pas la cas dans le second servomoteur où la chambre d'assistance est remplie de liquide à la pression atmosphérique. Ainsi, en utilisant deux servomoteurs de caractéristiques identiques par ailleurs on obtiendra une pression supérieure dans le circuit desservi par le premier servomoteur, ceci étant particulièrement avantageux pour l'alimentation de freins à disque.

En second lieu, en cas de panne de la source de dépression, on note que le fluide sous pression provenant du maître-cylindre alimente directement les freins à disque en traversant le clapet 146 du premier servomoteur, ce qui permet d'assurer un freinage minimal réglementaire du véhicule, sans que l'effort nécssaire à la pédale du maître-cylindre dépasse une limite tolérée.

Enfin, l'utilisation d'un maître-cylindre tandem permet également d'assurer un freinage minimal du véhicule en cas de rupture de l'un ou l'autre des conduits 16 et 18 ou des organes qu'ils desservent. Dans cette éventualité, le freinage avec assistance est maintenu sur l'une ou l'autre des paires de freins. L'homme de l'art comprendra naturellement que, compte tenu de la grande différence entre les absorbtions des circuits desservis par ces deux conduits, les deux chambres du maître-cylindre auront des dimensions également très différentes, la chambre alimentant la seule valve de commande du servomoteur étant de petite taille et la chambre reliée au premier servomoteur étant de taille plus importante.

**Revendications**

1. Installation de freinage pour véhicules utilitaires, comprenant un maître-cylinder (12) à commande manuelle, un premier (120) et un second (220) servomoteurs à dépression pour respectivement une première paire (34, 36) et une seconde paire (40, 42) de freins, chaque servomoteur étant commandé par une valve de commande (140, 240) actionnée par une pression en provenance du maître-cylinder (12) et comprenant une chamber hydraulique d'assistance et de réalimentation (128, 228), la chambre d'assistance et de réalimentation (128) du premier servomoteur (120) étant reliée au maître-cylinder (12) et la chambre d'assistance et de réalimentation (228) du second servomoteur (220) étant reliée à une réservoir de liquide de frein à la pression atmosphérique (250), caractérisée en ce que le maître-cylindre (12) est un maître-cylindre tandem comportant deux chambres, les valves de commande (140; 240) des premier (120) et second (220) servomoteurs étant respectivement reliées à l'une et l'autre de ces chambres du maître-cylinder, les freins de la première paire (34, 36) étant des freins à disque et les freins de la seconde paire (40, 42) étant des freins à tambour du type non autoserreur.

2. Installation de freinage selon la revendication 1, caractérisé en ce que les premier (120) et second (220) servomoteurs ont par ailleurs une structure identique.

**Patentansprüche**

1. Bremsanlage für Gebrauchsfahrzeuge mit einem handbetätigbaren Hauptbremszylinder (12), einem ersten (120) und einem zweiten (220) Niederdruck-Servomotor für ein erstes Paar (34, 36) bzw. ein zweites Paar (40, 42) Bremmsen, wobei jeder Servomotor durch ein Steuerventil (140, 240) gesteuert wird, das durch einen vom Hauptbremszylinder (12) herrührenden Druck betätigbar ist und eine hydraulische Hilfs- und Wiederbeaufschlagungskammer (128; 228) aufweist, wobei die Hilfs- und Wiederbeaufschlagungskammer (128) des ersten Servomotors (120) mit dem Hauptbremszylinder (12) und die Hilfs- und Wiederbeaufschlagungskammer (228) des zweiten Servomotors (220) mit einem Bremsflüssigkeitsbehälter (250) von atmosphärischem Druck verbunden ist, dadurch gekennzeichnet, daß der Hauptbremszylinder (12) ein Tandem-Hauptbremszylinder mit zwei Kammern ist, wobei die Steuerventile (140, 240) des ersten (120) und zweiten (220) Servomotor mit der einen bzw. der anderen dieser Kammern des hauptbremszylinders verbunden sind, daß die Bremsen des ersten Paares (34, 36) Scheibenbremsen und die Bremsen des zweiten Paares (40, 42) sich nicht selbst verstärkende Trommelbremsen sind.

2. Bremsanlage nach Anspruch 1, dadurch gekennzeichnet, daß der erste (120) und der zweite (220) Servomotor im übrigen den gleichen Aufbau haben.

**Claims**

1. A brake system for commercial vehicles, comprising a manually actuated master cylinder (12), first (120) and second (220) vacuum servo motors for, respectively, a first pair (34, 36) and a second pair (40, 42) of brakes, each servo motor being controlled by a control valve (140, 240) actuated by a pressure generated by the master cylinder (12) and comprising a hydraulic assistance and refeeding chamber (128; 228), the assistance and refeeding chamber (128) of the first servo motor (120) being connected to the master cylinder (12) and the assistance and refeeding chamber (228) of the second servo motor (220) being connected to a brake liquid reservoir of atmospheric pressure (250), characterized in that the master cylinder (12) is a tandem master cylinder comprising two chambers, the control valve (140; 240) of the first (120) and second (220) servo motors being respectively connected to the one and the other of these chambers of the master cylinder, the brakes of the first pair (34, 36) being disk brakes and the brakes of the second pair (40, 42) being drum brakes of the non-self energizing type.

2. The brake system of claim 1, characterized in that the first (120) and second (220) servo motors being otherwise of identical structure.

FIG_1

FIG_2

0 0 5 3 0 5 6

FIG_3

0053 056